# FASCICULE DE BREVET EUROPEEN

(11) **EP 2 753 851 B1**
(45) Date de publication et mention de la délivrance du brevet: **18.11.2015**
(21) Numéro de dépôt: 12767044.6
(22) Date de dépôt: 07.09.2012
(51) Int. Cl.: F16H 55/14, F16H 57/00

(54) **AMORTISSEMENT DES VIBRATIONS D'UN PIGNON PAR PATCH VISCOELASTIQUE**
RITZELSCHWINGUNGSDÄMPFUNG MIT VISKOELASTISCHEM PATCH
PINION VIBRATION DAMPING USING VISCOELASTIC PATCH

(30) Priorité: 08.09.2011 FR 1157991
(43) Date de publication de la demande: 16.07.2014
(73) Titulaire: Turbomeca, 64510 Bordes (FR)
(72) Inventeur: MARSAUDON, Mathieu, F-64140 Billere (FR); CUTULI, Philippe, F-64230 Lescar (FR)
(74) Mandataire: Milien, Jean-Baptiste Aurélien
(86) Numéro de dépôt international: PCT/FR2012/052003
(87) Numéro de publication internationale: WO 2013/034862

(56) Documents cités:
- EP-A1- 0 050 567
- GB-A- 2 161 888
- US-A- 3 377 097
- US-A- 3 799 025

## Description

### Arrière-plan de l'invention

La présente invention concerne le domaine technique des roues d'engrenage, notamment mais pas seulement celles que l'on trouve dans les boites de réduction de vitesse de turbomachine. L'invention porte plus particulièrement sur la problématique de l'amortissement des vibrations pouvant apparaître dans les roues d'engrenage, notamment dans les pignons réducteurs de turbomoteurs ou pignons de multiplicateurs de vitesse.

Il est bien connu que les vibrations qui sont susceptibles d'apparaître dans les roues d'engrenage entrainées en rotation à grande vitesse peuvent endommager les roues. C'est pourquoi l'on cherche à amortir ces vibrations.

Pour ce faire, il est notamment connu d'utiliser un jonc métallique annulaire fendu qui est placé en dessous de la jante portant les dents d'engrenage. Généralement, le jonc métallique vient se loger dans une gorge annulaire ménagée dans la surface périphérique intérieure de la jante, concentrique à l'axe de rotation de la roue.

Si cette solution permet de réduire de manière notable les vibrations, elle présente toutefois l'inconvénient potentiel de provoquer une usure du jonc et l'apparition indésirable de limaille dans le circuit d'huile.

Une autre solution est d'adapter la géométrie au comportement vibratoire, ce qui a pour effet désavantageux d'augmenter la masse de la roue.

Encore une autre solution est d'utiliser un dispositif d'amortissement de vibrations comprenant un matériau viscoélastique. Cette solution est notamment décrite dans FR 2 664 667 et GB 2 463 649.

Considéré selon la direction de l'axe de rotation de la roue d'engrenage, le matériau viscoélastique est fixé solidairement entre un organe support en acier et un élément de contrainte. Le dispositif d'amortissement de vibrations est fixé à la roue d'engrenage par l'intermédiaire de l'organe support qui est logé sous contrainte radiale dans une gorge annulaire ménagée dans la jante. Ce dispositif d'amortissement réalise un amortissement par cisaillement. Un inconvénient de ce dispositif est que le frottement métal/métal entre l'organe support et la jante de la roue peut générer là encore de l'usure et de la limaille.

D'autres roues d'engrenage sont connues de GB 2 161, qui représente l'état de la technique le plus proche, et US 3 799 025.

### Objet et résumé de l'invention

Un objet de la présente invention est de proposer une roue d'engrenage comportant un dispositif d'amortissement de vibrations amélioré.

L'invention porte donc sur une roue d'engrenage s'étendant selon une direction axiale et une direction radiale, comprenant un voile radial portant une jante annulaire axiale, ladite jante portant des dents d'engrenage, ledit voile étant muni d'un dispositif d'amortissement de vibrations, le dispositif d'amortissement de vibrations étant constitué d'une couche de matériau viscoélastique et d'une contre-couche, la couche de matériau viscoélastique étant disposée axialement entre le voile radial et la contre-couche, la couche de matériau viscoélastique étant fixée directement au voile. Le voile radial présente une forme sensiblement tronconique, tandis que le dispositif d'amortissement de vibrations est disposé du côté intérieur de la forme tronconique.

On comprend qu'un voile peut s'étendre perpendiculairement à l'axe de rotation de la roue, ou former un angle inférieur à 90° avec l'axe de rotation de la roue. De manière générale, le voile forme un angle compris entre 45° et 90° avec l'axe de rotation de la roue. Préférentiellement, le voile forme un angle compris entre 65° et 90° avec l'axe de rotation de la roue. Bien entendu, pour mesurer cet angle, on mesure toujours le plus petit angle formé entre le voile et l'axe de rotation de la roue.

On comprend que lorsque le voile forme un angle inférieur à 90° avec l'axe de rotation de la roue, le voile présente une forme générale de tronc de cône (i.e. forme tronconique). Ainsi, un voile présentant une "forme sensiblement tronconique" est un voile qui présente au moins une région de forme annulaire inclinée par rapport à l'axe de rotation de la roue d'engrenage, cette forme annulaire inclinée pouvant présenter une section axiale (section selon un plan comprenant l'axe de la forme sensiblement tronconique) concave (forme de bol), convexe (forme de pavillon de trompette), ou rectiligne (forme tronconique) ou une forme intermédiaire entre ces formes.

Par la suite, les termes « longueur radiale » et « épaisseur axiale » désignent respectivement une longueur mesurée parallèlement à l'élément considéré (par ex. le voile ou le dispositif d'amortissement de vibrations) selon une direction sensiblement radiale (i.e. faisant un angle compris entre 0° et 45° avec la direction radiale) et une épaisseur mesurée perpendiculairement à l'élément considéré selon une direction sensiblement axiale (i.e. faisant un angle compris entre 0° et 45° avec la direction axiale).

Le dispositif d'amortissement de vibrations est constitué de deux couches uniquement, à savoir la couche de matériau viscoélastique et la contre-couche (ou couche de matériau rigide). En outre, la couche de matériau viscoélastique est fixée directement au voile, ce qui signifie que contrairement à l'art antérieur décrit ci-dessus, il n'y a pas d'organe support entre la roue et la couche de matériau viscoélastique.

Un autre avantage de l'invention est qu'elle ne nécessite pas la présence de gorge annulaire ménagée dans la roue. La roue selon l'invention est ainsi dépourvue de gorge annulaire recevant le dispositif d'amortissement de vibrations. En effet, un inconvénient d'une telle gorge est qu'elle génère un accident de forme et une concentration de contraintes dans une zone nécessitant un dimensionnement spécifique, voire une augmentation significative d'épaisseur pour garantir la tenue mécanique de la pièce. Selon l'invention, le dispositif d'amortissement est directement fixé sur le voile de la roue. Cela permet de ne pas générer d'accident de forme et d'améliorer sensiblement le dimensionnement massique de la roue.

Encore un avantage de l'invention réside dans le fait que le dispositif d'amortissement ne comporte que deux couches. En effet, plus il y a de couches, plus l'amortissement est difficile à maîtriser et à reproduire.

En outre, grâce à l'absence d'organe de support entre la couche de matériau viscoélastique et la roue, le dispositif d'amortissement de vibrations selon l'invention n'est pas perturbé par les caractéristiques de l'organe support.

Les inventeurs ont remarqué avec surprise que le positionnement du dispositif d'amortissement selon l'invention sur le voile permet d'obtenir un niveau d'amortissement des vibrations satisfaisant, au moins équivalent à celui obtenu avec les dispositifs d'amortissement placés sur la jante de l'art antérieur. En étant placé sur le voile, le dispositif d'amortissement selon l'invention permet d'amortir notamment, mais pas uniquement, les modes de vibrations du voile et/ou les modes de vibrations combinées du voile et de la jante.

En outre, l'invention permet d'obtenir un amortissement de vibrations par compression, alors que dans l'art antérieur l'amortissement est réalisé par cisaillement. Pour une amplitude de vibration donnée, indépendamment du mode et de l'élément considéré (la jante ou le voile), les inventeurs ont constaté avec surprise que l'amortissement par compression obtenu grâce au dispositif d'amortissement de vibrations selon l'invention est tout aussi efficace que l'amortissement par cisaillement de l'art antérieur.

Les modes de vibrations du voile, ou les modes de vibrations combinées du voile et de la jante, génèrent des déformations du voile selon une direction sensiblement axiale. Le dispositif d'amortissement de vibrations, qui est fixé directement sur le voile, est ainsi entrainé par le voile selon cette direction sensiblement axiale. Ainsi, puisque la couche de matériau viscoélastique et la contre-couche sont disposées successivement selon une direction perpendiculaire au voile et sensiblement parallèle à la direction des déformations du voile, la contre-couche, grâce à son inertie, exerce un effort de traction/compression sur la couche de matériau viscoélastique opposé aux mouvements de déformation du voile. Les mouvements vibratoires axiaux du voile, et plus généralement de la roue, sont ainsi contrebalancés et atténués. Bien entendu, lorsque l'axe de rotation de la roue d'engrenage est disposé sensiblement horizontalement (par rapport à la direction de la gravité), l'effet d'amortissement du dispositif d'amortissement peut également présenter une composante en cisaillement, notamment à cause de la masse de la contre-couche. Néanmoins, l'amortissement est réalisé en majorité grâce à la composante axiale (i.e. en compression) de la réaction du dispositif d'amortissement aux modes de vibrations de la roue.

En disposant le dispositif d'amortissement à l'intérieur du tronc de cône formé par le voile, l'effet d'amortissement en compression est amélioré, notamment grâce aux efforts centrifuges dus à la rotation de la roue.

Ainsi, grâce à l'invention, il est possible de réduire les épaisseurs des différents éléments de la roue, et notamment l'épaisseur axiale du voile, par rapport aux roues connues ce qui permet de diminuer la masse de la roue. Par ailleurs, l'épaisseur du voile étant plus petite (et donc le voile étant plus léger) que celles des voiles de roues connues, on évite d'avoir à ménager d'éventuels perçages dans le voile afin d'en réduire la masse, ces perçages entrainant généralement du balourd et diminuant la raideur et la tenue mécanique dudit voile.

De manière avantageuse, le dispositif d'amortissement de vibrations présente une géométrie annulaire. Le dispositif d'amortissement peut présenter la forme d'un anneau continu, fendu ou bien encore multi-segmenté.

En outre, la contre-couche présente de préférence une longueur radiale au moins égale à celle de la couche de matériau viscoélastique, grâce à quoi la contre-couche recouvre radialement le matériau viscoélastique, et ce afin de le protéger. Néanmoins la contre-couche peut également présenter une longueur inférieure à celle du matériau viscoélastique. La longueur radiale du dispositif d'amortissement de vibrations sera par exemple comprise entre 5 et 15 mm, pour un voile radial ayant une longueur radiale de 35 mm.

De préférence, la couche de matériau viscoélastique présente une épaisseur axiale comprise entre 0,1 mm et 3 mm. Bien entendu, l'épaisseur de la couche de matériau viscoélastique sera adaptée aux fréquences à amortir. Encore de préférence, la contre-couche présente une épaisseur axiale comprise entre 0,5 mm et 2 mm. Encore plus préférentiellement, la contre-couche présente une épaisseur axiale d'environ 1 mm.

Comme matériau constitutif de la contre-couche, on pourra choisir de préférence un matériau plus rigide que le matériau de la couche viscoélastique. Pour la contre-couche, on pourra notamment choisir un matériau métallique, par exemple un acier, ou tout autre matériau rigide tel un matériau composite ou bien encore un matériau plastique. Le matériau viscoélastique sera de préférence un élastomère.

Préférentiellement, la roue d'engrenage comprend un moyeu, le dispositif d'amortissement de vibrations étant disposé plus proche de la jante annulaire que du moyeu. Ainsi, le dispositif d'amortissement est disposé là où les amplitudes de déformation du voile sont les plus importantes, ce qui améliore la réaction du dispositif d'amortissement, notamment aux vibrations axiales du voile. L'amortissement des vibrations de la roue, en particulier du voile ou de l'ensemble voile plus jante, est ainsi amélioré.

Bien entendu, selon une variante, la roue d'engrenage comporte au moins deux dispositifs d'amortissement de vibrations. Ces deux dispositifs d'amortissement peuvent être disposés du même côté du voile ou bien sur les côtés opposés du voile (i.e. de part et d'autre du voile). Selon une autre variante, la roue d'engrenage présente un ou plusieurs dispositifs d'amortissement fixé(s) sur le voile, et un ou plusieurs dispositifs fixé(s) sur la jante (notamment sur une surface périphérique axiale de la jante).

Selon un mode de réalisation avantageux de l'invention, la roue d'engrenage est un pignon, par exemple un pignon réducteur de sortie ou bien un pignon réducteur intermédiaire d'un turbomoteur.

L'invention porte également sur une turbomachine, par exemple un turbomoteur d'hélicoptère, comprenant une roue d'engrenage selon l'invention, ladite roue d'engrenage étant alors un pignon réducteur.

L'invention porte en outre sur un procédé de fabrication d'une roue d'engrenage selon l'invention, ledit procédé comportant une étape de vulcanisation de la couche de matériau viscoélastique sur le voile radial.

De préférence, on fournit une roue d'engrenage (initialement dépourvue de dispositif d'amortissement de vibration), on fournit un dispositif d'amortissement de vibrations constitué d'une couche de matériau de viscoélastique et d'une contre-couche, ces deux couches étant préalablement fixées solidairement l'une à l'autre, et on vulcanise le matériau viscoélastique sur la surface du voile radial afin d'adhériser le dispositif d'amortissement à la roue d'engrenage.

Selon une variante, le procédé de fabrication peut également faire intervenir la vulcanisation du matériau viscoélastique simultanément sur la contre-couche et la surface du voile de la roue.

Selon une autre variante, le procédé de fabrication d'une roue d'engrenage comporte une étape de collage de la couche de matériau viscoélastique sur le voile radial. Un film de colle est donc présent entre la couche de matériau viscoélastique et le voile.

### Brève description des dessins

L'invention sera mieux comprise à la lecture de la description qui suit d'un mode de réalisation de l'invention donné à titre d'exemple non limitatif, en référence aux dessins annexés, sur lesquels :
- la figure **1** illustre un turbomoteur d'hélicoptère comportant une roue d'engrenage selon l'invention ;
- la figure **2** est une vue en coupe axiale d'une roue d'engrenage selon l'invention comportant un dispositif d'amortissement de vibrations;
- la figure **3** est une vue de détail de la figure **2** montrant le dispositif d'amortissement de vibrations ;
- la figure **4** est une vue partielle en perspective de la roue d'engrenage de la figure **2****.**

### Description détaillée de l'invention

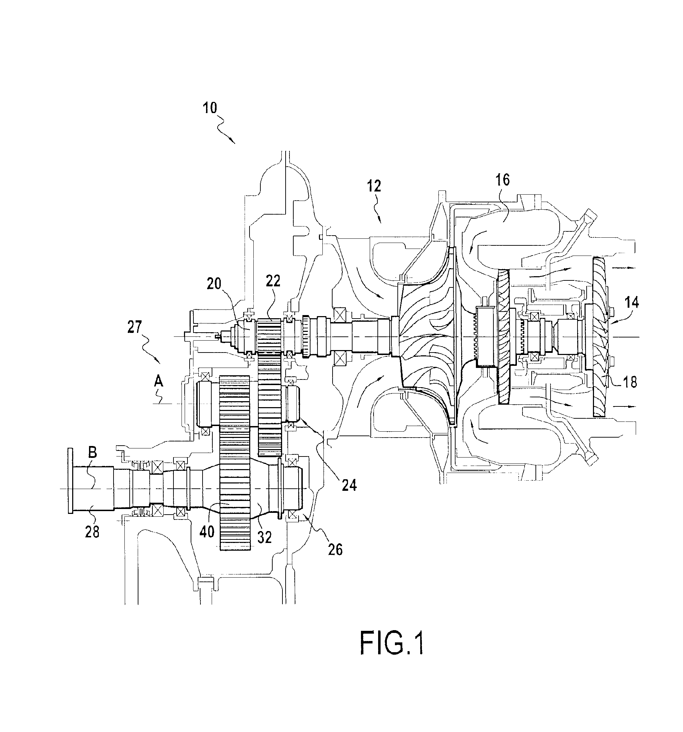

La figure **1** illustre une turbomachine **10,** en l'espèce un turbomoteur d'hélicoptère. De manière classique, ce turbomoteur **10** comporte un générateur de gaz **12** et une turbine libre **14** entrainée en rotation par le flux de gaz brûlés sortant de la chambre de combustion **16.** La turbine libre **14** comprend une roue de turbine **18** qui est fixée à l'une des extrémités d'un arbre **20.** A l'autre extrémité de l'arbre **20** se trouve un pignon primaire **22** qui engrène avec un pignon intermédiaire **24.** Le pignon intermédiaire **24,** qui est entrainé en rotation autour de son axe **A** par le pignon primaire **22,** engrène avec un pignon de sortie **26** conforme à la présente invention. Le pignon intermédiaire **24** et le pignon de sortie **26** sont des roues d'engrenage qui font partie du réducteur de vitesse **27** de la turbomachine **10.** Le pignon de sortie **26,** entrainé en rotation autour de son axe **B** par le pignon intermédiaire **24,** est relié à un arbre de sortie **28** destiné à être accouplé à la boite de transmission principale de l'hélicoptère (non représentée ici).

Bien entendu, l'invention pourra s'appliquer à d'autres types de moteurs et turbomoteurs, par exemple aux turbomachines dont les turbines sont liées.

Lors du fonctionnement du turbomoteur, le pignon intermédiaire **24** et le pignon de sortie **26** subissent des vibrations. Comme mentionné plus haut, le but de l'invention est d'amortir ces vibrations.

Dans cet exemple, le pignon de sortie **26** est donc une roue d'engrenage conforme à l'invention. Sans sortir du cadre de l'invention, le pignon intermédiaire **24** pourrait également être une roue d'engrenage selon la présente invention. Autrement dit, l'invention peut être appliquée au pignon intermédiaire **24** et/ou au pignon de sortie **26.**

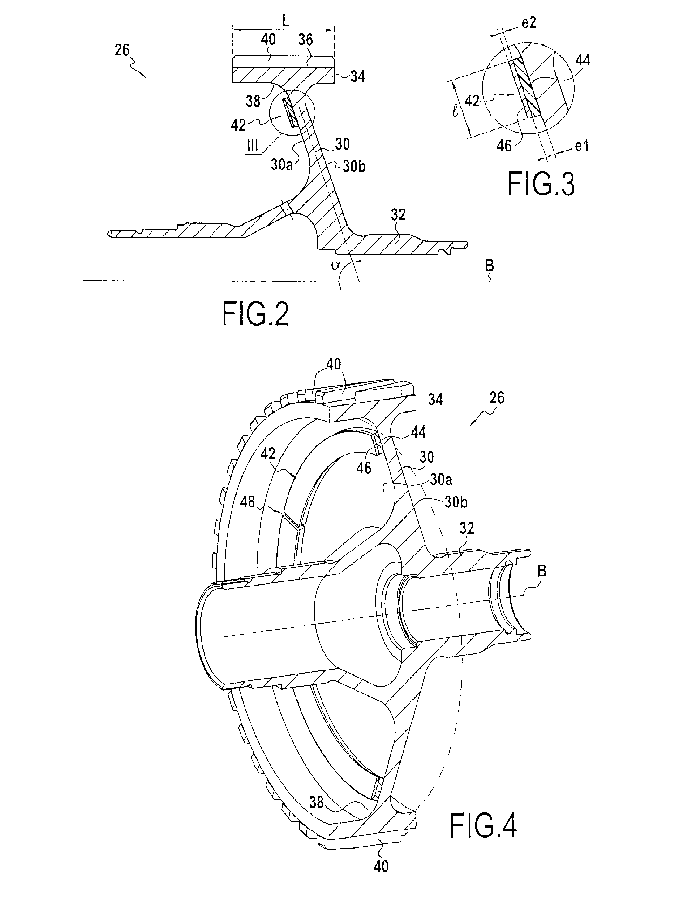

En se référant à la figure **2****,** on va maintenant décrire plus en détail le pignon de sortie **26** conforme à l'invention.

Comme on le voit sur cette vue en coupe axiale, le pignon de sortie **26** comporte classiquement un voile radial **30** s'étendant radialement entre un moyeu **32** et une jante annulaire **34.** Le voile **30** forme un angle α inférieur à 90° avec l'axe de rotation **B** du pignon **26.** Dans cet exemple, α=70°.

La jante annulaire **34** présente une première surface périphérique, à savoir une surface périphérique extérieure **36,** et une seconde surface périphérique, à savoir une surface périphérique intérieure **38.** Les surfaces périphériques intérieure et extérieure s'étendent de manière annulaire autour de l'axe **B.** A l'aide de la figure **4****,** on constate que la surface périphérique extérieure **36** porte des dents d'engrenage **40.**

Le voile radial **30** présente une forme tronconique et une surface tronconique intérieure **30a** à l'intérieur de la forme tronconique et une surface tronconique extérieure **30b** à l'extérieur de la forme tronconique.

Conformément à la présente invention, la surface tronconique intérieure **30a** est munie d'un dispositif d'amortissement de vibrations **42** qui est constitué d'une couche de matériau viscoélastique **44** et d'une contre-couche **46.** En d'autres termes, le dispositif d'amortissement de vibrations **42** ne comporte que deux couches. Toujours selon l'invention, la couche de matériau viscoélastique **44** est disposée axialement (i.e. selon la direction définie par l'axe B) entre le voile **30,** et plus particulièrement la surface tronconique intérieure **30a** du voile **30** et la contre-couche **46.** On comprend donc que, dans cet exemple non limitatif, la couche de matériau viscoélastique est fixée à la fois à la surface tronconique intérieure **30a** et à la contre-couche **46.**

Comme on le voit sur la figure **3**, selon l'invention, la couche de matériau viscoélastique **44** est fixée directement à la surface tronconique intérieure **30a** du voile **30,** c'est-à-dire qu'il n'y a pas d'organe de couplage entre la couche de matériau viscoélastique **44** et le voile **30.** En outre, le pignon **26,** et plus particulièrement le voile **30,** est dépourvu de gorge annulaire.

Pour fabriquer le pignon de sortie **26** selon l'invention, on réalise une étape de fixation du dispositif d'amortissement de vibrations **42** au voile radial **30** par collage ou par vulcanisation de la couche de matériau viscoélastique **44** contre la surface tronconique intérieure **30a** du voile radial **30,** étant précisé que le pignon de sortie **26** est métallique.

Ainsi, lorsque le dispositif d'amortissement **42** est collé au voile **30,** on comprend qu'il peut exister un film de colle entre la couche de matériau viscoélastique **44** et la surface tronconique intérieure **30a** du voile **30.**

Par ailleurs, la contre-couche **46** pourra être collée ou vulcanisée à la couche de matériau viscoélastique **44.**

La couche de matériau viscoélastique **44** est vulcanisée à la surface tronconique intérieure **30a** du voile **30.**

En se référant à la figure **4****,** on constate que le dispositif d'amortissement de vibrations **42** présente une forme annulaire en s'étendant sur pratiquement toute une bande annulaire de la surface tronconique intérieure **30a** du voile radial **30.** Le dispositif d'amortissement de vibrations **42** est avantageusement fendu, c'est-à-dire qu'il présente une fente **48** s'ouvrant de préférence sur toute l'épaisseur axiale et toute la longueur radiale du dispositif d'amortissement **42.** Un intérêt est d'améliorer l'adaptation de la contre-couche **46** à la géométrie et aux déformations de la roue afin d'améliorer l'absorption des vibrations.

Comme on peut le voir sur la figure **3****,** la contre-couche **46** présente une longueur radiale **l** sensiblement égale à celle de la couche de matériau viscoélastique **44.** La longueur radiale **l** de la contre-couche **46** pourrait être légèrement supérieure à celle de la couche de matériau viscoélastique **44.** Le fait que la contre-couche **46** recouvre radialement la couche de matériau viscoélastique **44** permet de protéger cette dernière afin de limiter les interactions et agressions du milieu environnant (transport, manipulation, fluide en contact, etc...).

Dans cet exemple, le dispositif d'amortissement de vibrations **42** est disposé radialement plus près de la jante annulaire **34** que du moyeu **32.** Il pourra toutefois être disposé radialement dans une autre zone afin d'amortir des modes de déformations particuliers du voile **30.**

A titre d'exemple non limitatif, l'épaisseur axiale **e1** de la couche de matériau viscoélastique **44** est comprise entre 0,5 mm et 3 mm, tandis que l'épaisseur axiale **e2** de la contre-couche **46** est comprise entre 0,5 mm et 2 mm. Ces épaisseurs seront choisies en fonction des dimensions du pignon **26,** des fréquences à amortir et du choix des matériaux constitutifs des deux couches précitées. Dans cet exemple, le matériau viscoélastique est un élastomère du type Nitrile tandis que la contre-couche est un acier, étant précisé que l'on pourra éventuellement choisir un autre matériau, par exemple un métal, un matériau composite, ou encore un matériau plastique.

La longueur radiale **l** du dispositif d'amortissement de vibrations **42** (dans cet exemple égale à la longueur radiale de la couche en matériaux viscoélastique et de la contre-couche) est comprise entre 5 et 15 mm, donc sensiblement supérieure à son épaisseur.

La couche de matériau viscoélastique **44** travaille en compression. On peut ainsi obtenir un amortissement par compression des vibrations sur une plage de fréquences comprise environ entre 5 kHz et 30 kHz. L'amortissement des vibrations offre la possibilité de réduire sensiblement la masse du pignon de sortie **26** en diminuant notamment l'épaisseur, de la jante, du voile et/ou du moyeu. Le gain de masse est de l'ordre de 20% sur le pignon de sortie **26.** Le même résultat peut être obtenu sur le pignon intermédiaire **24.**

## Revendications

1. Roue d'engrenage (26) s'étendant selon une direction axiale et une direction radiale, comprenant un voile radial (30) portant une jante annulaire axiale (34), ladite jante (34) portant des dents d'engrenage (40), dans laquelle ledit voile (30) est muni d'un dispositif d'amortissement de vibrations (42) constitué d'une couche de matériau viscoélastique (44) et d'une contre-couche (46), la couche de matériau viscoélastique (44) étant disposée axialement entre le voile radial (30) et la contre-couche (46), et la couche de matériau viscoélastique (44) étant fixée directement au voile (30), **caractérisé en ce que** le voile radial (30) présente une forme tronconique, le dispositif d'amortissement de vibrations (42) étant disposé du côté intérieur de la forme tronconique.

2. Roue d'engrenage selon la revendication **1, caractérisée en ce que** le dispositif d'amortissement de vibrations (42) présente la forme d'un anneau continu, fendu ou multi-segmenté.

3. Roue d'engrenage selon la revendication **1** ou **2, caractérisée en ce que** la contre-couche (46) présente une longueur radiale (I) au moins égale à celle de la couche de matériau viscoélastique (44).

4. Roue d'engrenage selon l'une quelconque des revendications **1** à **3, caractérisée en ce que** la couche de matériau viscoélastique (44) présente une épaisseur axiale (e1) comprise entre 0,1 mm et 3 mm.

5. Roue d'engrenage selon l'une quelconque des revendications **1** à **4, caractérisée en ce que** la contre-couche (46) présente une épaisseur axiale (e2) comprise entre 0,5 mm et 2 mm.

6. Roue d'engrenage selon l'une quelconque des revendications **1** à **5, caractérisée en ce qu'**elle comprend un moyeu (32), le dispositif d'amortissement de vibrations (42) étant disposé plus proche de la jante annulaire (34) que du moyeu (32).

7. Turbomachine (10) comprenant une roue d'engrenage selon l'une quelconque des revendications **1** à **6,** ladite roue d'engrenage étant un pignon (26).

8. Procédé de fabrication d'une roue d'engrenage selon l'une quelconque des revendications **1** à **6**, **caractérisé en ce qu'**il comporte une étape de vulcanisation de la couche de matériau viscoélastique (44) sur le voile radial (30).

9. Procédé de fabrication d'une roue d'engrenage selon l'une quelconque des revendications **1** à **6, caractérisé en ce qu'**il comporte une étape de collage de la couche de matériau viscoélastique (44) sur le voile radial (30).

## Patentansprüche

1. Getrieberad (26), das sich in einer axialen Richtung und einer radialen Richtung erstreckt, umfassend einen Radialkörper (30), der einen ringförmigen axialen Radkranz (34) trägt, wobei der Radkranz (34) Eingriffszähne (40) trägt, bei dem der Körper (30) mit einer Schwingungsdämpfungsvorrichtung (42), welche von einer Schicht aus viskoelastischem Material (44) und von einer Gegenschicht (46) gebildet ist, ausgestattet ist, wobei die Schicht aus viskoelastischem Material (44) zwischen dem Radialkörper (30) und der Gegenschicht (46) axial angeordnet ist und wobei die Schicht aus viskoelastischem Material (44) direkt an dem Körper (30) befestigt ist, **dadurch gekennzeichnet, dass** der Radialkörper (30) eine Kegelstumpfform aufweist, wobei die Schwingungsdämpfungsvorrichtung (42) auf der Innenseite der Kegelstumpfform angeordnet ist.

2. Getrieberad nach Anspruch 1, **dadurch gekennzeichnet, dass** die Schwingungsdämpfungsvorrichtung (42) die Form eines durchgehenden, geschlitzten oder in mehrere Segmente geteilten Rings aufweist.

3. Getrieberad nach Anspruch 1 oder 2, **dadurch gekennzeichnet, dass** die Gegenschicht (46) eine radiale Länge aufweist, die wenigstens gleich derjenigen der Schicht aus viskoelastischem Material (44) ist.

4. Getrieberad nach einem der Ansprüche 1 bis 3, **dadurch gekennzeichnet, dass** die Schicht aus viskoelastischem Material (44) eine axiale Dicke (e1) im Bereich zwischen 0,1 mm und 3 mm aufweist.

5. Getrieberad nach einem der Ansprüche 1 bis 4, **dadurch gekennzeichnet, dass** die Gegenschicht (46) eine axiale Dicke (e2) im Bereich zwischen 0,5 mm und 2 mm aufweist

6. Getrieberad nach einem der Ansprüche 1 bis 5, **dadurch gekennzeichnet, dass** es eine Nabe (32) umfasst, wobei die Schwingungsdämpfungsvorrichtung (42) näher an dem ringförmigen Radkranz (34) als an der Nabe (32) angeordnet ist.

7. Turbomaschine (10), umfassend ein Getrieberad nach einem der Ansprüche 1 bis 6, wobei das Getrieberad ein Ritzel (26) ist.

8. Verfahren zur Herstellung eines Getrieberades nach einem der Ansprüche 1 bis 6, **dadurch gekennzeichnet, dass** es einen Schritt zum Vulkanisieren der Schicht aus viskoelastischem Material (44) auf den Radialkörper (30) umfasst.

9. Verfahren zur Herstellung eines Getrieberades nach einem der Ansprüche 1 bis 6, **dadurch gekennzeichnet, dass** es einen Schritt zum Kleben der Schicht aus viskoelastischem Material (44) auf den Radialkörper (30) umfasst.

## Claims

1. A gearwheel (26) extending in an axial direction and in a radial direction, comprising a radial web (30) carrying an axial annular rim (34), said rim (34) carrying gear teeth (40), wherein said web (30) is provided with a vibration damper device (42) constituted by a layer of viscoelastic material (44) and by a backing layer (46), the layer of viscoelastic material (44) being arranged axially between the radial web (30) and the backing layer (46), and the layer of viscoelastic material (44) being fixed directly to the web (30), **characterized in that** the radial web (30) is frustoconical in shape, the vibration damper device (42) being placed on the inner side of the frustoconical shape.

2. A gearwheel according to claim 1, **characterized in that** the vibration damper device (42) is in the form of a ring that is continuous, split, or in multiple segments.

3. A gearwheel according to claim 1 or claim 2, **characterized in that** the backing layer (46) presents a radial length (1) that is at least equal to the one of the layer of viscoelastic material (44).

4. A gearwheel according to any one of claims 1 to 3, **characterized in that** the layer of viscoelastic material (44) presents an axial thickness (e1) lying in the range 0.1 mm to 3 mm.

5. A gearwheel according to any one of claims 1 to 4, **characterized in that** the backing layer (46) presents an axial thickness (e2) lying in the range 0.5 mm to 2 mm.

6. A gearwheel according to any one of claims 1 to 5, **characterized in that** it includes a hub (32), the vibration damper device (42) being arranged closer to the annular rim (34) than to the hub (32).

7. A turbine engine (10) including a gearwheel according to any one of claims 1 to 6, said gearwheel being a pinion (26).

8. A method of fabricating a gearwheel according to any one of claims 1 to 6, **characterized in that** it includes a step of vulcanizing the layer of viscoelastic material (44) on the radial web (30).

9. A method of fabricating a gearwheel according to any one of claims 1 to 6, **characterized in that** it includes a step of adhesively bonding the layer of viscoelastic material (44) on the radial web (30).
